# EUROPEAN PATENT SPECIFICATION

(11) **EP 3 365 223 B1**
(45) Date of publication and mention of the grant of the patent: **04.12.2019**
(21) Application number: 16797587.9
(22) Date of filing: 18.10.2016
(51) Int. Cl.: B63B 9/06, B63B 9/00, B63B 11/00

(54) **METHOD AND SYSTEM FOR DETERMINING THE MANUFACTURING DIMENSIONS FOR A CONNECTING ELEMENT**
VERFAHREN UND SYSTEM ZUR BESTIMMUNG DER HERSTELLUNGSDIMENSIONEN FÜR EIN VERBINDUNGSELEMENT
PROCÉDÉ ET SYSTÈME POUR DÉTERMINER LES DIMENSIONS DE FABRICATION POUR UN ÉLÉMENT DE RACCORDEMENT

(30) Priority: 20.10.2015 FI 20155747
(43) Date of publication of application: 29.08.2018
(73) Proprietor: Elomatic Oy, 20810 Turku (FI)
(72) Inventor: RAUTAHEIMO, Patrik, 20900 Turku (FI)
(74) Representative: Berggren Oy, Turku
(86) International application number: PCT/FI2016/050730
(87) International publication number: WO 2017/068244

(56) References cited:
- JP-A- 2001 062 758
- KR-A- 20120 009 162
- KR-A- 20130 102 959
- RU-C1- 2 527 251

## Description

### TECHNICAL FIELD OF THE INVENTION

The present invention relates to a method and a system for determining the manufacturing dimensions for a connecting element according to the preambles of the appended independent claims.

### BACKGROUND OF THE INVENTION

Prefabrication methods are widely used in the construction of ships. In prefabrication a ship is assembled from prefabricated building blocks, i.e. ship blocks, which are built separately. Each ship block typically contains one or more sections, which are formed of cut-to-size steel plates that are provided with profiles, struts and side walls. The ship blocks are equipped with most of the electrics and with most of the pipes and ducts for heating, plumbing and ventilation purposes before the ship blocks are connected together. The rest of the installation work is done after the ship blocks have been connected together.

With the use of prefabrication the construction of a ship is faster compared to other known ship construction methods. Furthermore, since typically the ship blocks are built inside a factory shed in a controlled environment, also the building quality is higher.

Despite of the above advantages, known ship construction methods based on prefabrication of building blocks have a significant disadvantage that relates to connecting elements, such as pipes and ducts, which are connected between two structural elements in a connecting region of two interconnected ship blocks. In known ship construction methods, the manufacturing dimensions for these connecting elements are measured in situ inside the ship blocks after the ship blocks have been connected together. As a result of this the connecting elements cannot be manufactured in advance so that they would be ready to be installed right after the ship blocks have been connected together. This delays the construction of the ship as other construction stages must be postponed. Depending on the number and complexity of the connecting elements that will be installed in the connecting regions of the ship blocks, the delay is typically from a couple of hours to few days, or even to a couple of weeks.

Document RU 2527251 C1 describes a method for installing a zone block in a ship compartment. Document KR 20130102959 A describes a method for analyzing the manufacturing error of a hull block.

### OBJECTIVES OF THE INVENTION

It is the main objective of the present invention to reduce or even eliminate prior art problems presented above.

It is an objective of the present invention to provide a method and a system for determining the manufacturing dimensions for a connecting element that is to be installed between two structural elements in a connecting region of two interconnected structural blocks. It is also an objective of the invention to provide a method and a system enabling to safely and quickly determine the manufacturing dimensions for a connecting element that is to be installed between two structural elements in a connecting region of two interconnected structural blocks.

It is a further objective of the present invention to provide a method and a system enabling to reduce the construction time of a ship or other marine structure that is constructed from prefabricated building blocks.

In order to realise the above-mentioned objectives, the method and the system according to the invention are characterised by what is presented in the characterising parts of the appended independent claims. Advantageous embodiments of the invention are described in the dependent claims.

### DESCRIPTION OF THE INVENTION

A typical method according to the invention for determining the manufacturing dimensions for a connecting element that is to be connected between a first structural element in a first structural block and a second structural element in a second structural block that is connected to the first structural block, comprises:
- scanning the first and the second structural block with at least one laser scanner to obtain point clouds of the structural block ends that are to be connected together, and
- comparing the point clouds to 3D digital models of the first and the second structural block to obtain the manufacturing dimensions for the connecting element.

In the method according to the invention, the step of scanning the first and the second structural block with at least one laser scanner is performed before the structural blocks are connected together. Preferably, also the step of comparing the point clouds to 3D digital models of the first and the second structural block is performed before the structural blocks are connected together. The manufacturing of the connecting element can thus be started at an early stage so that the connecting element would be ready to be installed right after the ship blocks have been connected together.

In the method according to the invention, the ends of the structural blocks that are to be connected together are scanned to obtain the point clouds of the structural block ends. The structural elements between which the connecting element is to be installed are visible from the structural block ends. Thus, the point clouds comprise data of the structural elements. Such data can comprise, for example, ends of the structural elements, to which ends the connecting element is connected. The structural block ends are typically scanned one end at a time, but it is also possible to use so many laser scanners that the structural block ends can be scanned at the same time.

Each point cloud represents the structural block end as a set of data points in a three-dimensional coordinate system. These data points are defined by X, Y and Z coordinates. The point clouds are created by using one or more laser scanners, which measure a large number of points on the surface of the structural block end. When only one laser scanner is used, the scanning of a structural block end must typically be performed in several phases. In each phase, the laser scanner is placed in a different position so that all parts of the structural block end can be scanned. The scanning results are then combined to obtain the point cloud of the structural block end. When the structural block end is scanned using a plurality of laser scanners, the number of the laser scanners is preferably chosen in such a manner that the structural block end can be scanned in one phase. The laser scanners are placed at suitable distances from each other so that the whole area of the structural block end can be scanned.

In the method according to the invention, the point clouds are compared to 3D digital models of the structural blocks to obtain the manufacturing dimensions for the connecting element. The manufacturing dimensions include the data that is needed to manufacture a correct sized connecting element between the first structural element in the first structural block and the second structural element in the second structural block. The manufacturing dimensions may include, for example, the length, width and height of the connecting element, or the coordinates of the ends of the connecting element, which ends are to be connected to the structural elements.

The 3D digital model of the structural block is a CAD model that is used in building the structural block. The point clouds of the ends of the first and the second structural block are aligned to the corresponding 3D digital models, and compared to check for differences. These differences are used to extract the manufacturing dimensions for the connecting element. The differences can be displayed on a display as color maps that give a visual indicator of the deviation between the manufactured structural block and its digital model.

While the point clouds can be directly rendered and inspected, usually the point clouds themselves are generally not directly usable in 3D applications, and therefore are usually converted to polygon mesh or triangle mesh models, NURBS surface models, or CAD models through a process commonly referred to as surface reconstruction. There are many techniques for converting a point cloud to a 3D surface. Some approaches, like Delaunay triangulation, alpha shapes, and ball pivoting, build a network of triangles over the existing vertices of the point cloud, while other approaches convert the point cloud into a volumetric distance field and reconstruct the implicit surface so defined through a marching cubes algorithm.

According to an embodiment of the invention the step of scanning the first and the second structural block with at least one laser scanner comprises, for each structural block, scanning the structural block end with the at least one laser scanner from different positions and/or directions, collecting scanning data from the at least one laser scanner, and processing the scanning data to generate the point cloud of the structural block end. The number of scanning positions depends, for example, on the size of the structural block end that is scanned as well as the properties of the laser scanner(s) that is(are) used. The scanning direction can vary, for example, based on whether a centre area or an edge area of the structural block end is scanned.

According to an embodiment of the invention the distance between the adjacent scanning positions is less than 10 meters. The distance between the adjacent scanning positions is preferably less than 8 meters, and more preferably less than 6 meters. An advantage of a smaller distance between the adjacent scanning positions is a better scanning accuracy. However, because a smaller distance between the adjacent scanning positions typically increases the number of scanning processes and therefore the total scanning time, the distance between the adjacent scanning positions is preferably not less than 2 meters.

According to an embodiment of the invention the step of comparing the point clouds to 3D digital models of the first and the second structural block comprises calculating the positions of the structural elements in the point clouds with respect to the structural elements in the 3D digital models, and calculating the manufacturing dimensions for the connecting element using said positions and the data in the 3D digital models. By calculating the positions of the structural elements in the point clouds with respect to the structural elements in the 3D digital models the deviations of the structural elements from their designs are obtained. By utilising this information and the data in the 3D digital models, the manufacturing dimensions for the connecting element can be calculated. Preferably, the positions of the ends of the structural elements in the point clouds with respect to the ends of the structural elements in the 3D digital models are calculated. By ends of the structural elements are meant the ends between which the connecting element is to be connected. Preferably, a first end of the connecting element is to be connected to the end of the first structural element and a second end of the connecting element is to be connected to the end of the second structural element.

According to an embodiment of the invention the method comprises aligning each point cloud on the corresponding 3D digital model using as a point of reference a structure other than the structural element. Preferably, the structure that is used as a point of reference in the alignment is a structure close to the structural element. Such a structure can be, for example, a floor or a wall in the structural block.

According to an embodiment of the invention the method comprises producing an isometric drawing of the connecting element. An isometric drawing is a form of a three-dimensional projection in which all of the principal planes are drawn parallel to corresponding established axes and at true dimensions. An isometric drawing enables to visualize and understand what the connecting element will look like and thus makes the manufacturing of the connecting element easier.

According to an embodiment of the invention the connecting element and the structural elements are one of the following: a pipe, a duct, a cable tray or a frame for an interior design. Typically, the connecting element and the structural elements are of the same type. For example, the connecting element can be a pipe that is connected between the ends of the pipes in the structural blocks. Preferably, the connecting element and the structural elements are made mostly of a metal, such as steel.

According to an embodiment of the invention the structural blocks are one of the following: a ship block or an offshore structure block. Preferably, the structural blocks are made mostly of a metal, such as steel.

The present invention also relates to a system for determining the manufacturing dimensions for a connecting element that is to be connected between a first structural element in a first structural block and a second structural element in a second structural block that is connected to the first structural block. A typical system according to the invention comprises:
- at least one laser scanner for scanning the first and the second structural block to obtain scanning data of the structural block ends that are to be connected together, and
- a data processing means for generating, using the scanning data, point clouds of the structural block ends and comparing the point clouds to 3D digital models of the first and the second structural block to obtain the manufacturing dimensions for the connecting element.

The data processing means is preferably a computer that comprises memory and at least one processor and computer program code in the memory. The computer program code is configured to, when executed on the at least one processor, cause the system to generate, using the received scanning data, point clouds of the structural block ends and to compare the point clouds to 3D digital models of the structural blocks to obtain the manufacturing dimensions for the connecting pipe. The computer may be connected to a display and at least one input device. Using the display and the input device(s), a user can selectively manage and view the data that is managed by the computer. The input device may be a keyboard, a mouse, a rollerball, a pen and stylus, or a voice recognition system. The input device may also be a touch screen associated with the display.

According to an embodiment of the invention the laser scanner is a phase-shift laser scanner. The laser scanner can be, for example, a class 3R laser scanner.

According to an embodiment of the invention the laser scanner is a grayscale laser scanner.

The present invention can be applied in many technical fields, such as in ship and offshore structure building, where various connecting elements, such as pipes and ducts, are installed inside ship and offshore structure blocks after they have been connected together. The present invention can also be applied in construction industry to build high-rise buildings having a steel construction.

An advantage of the invention is that it reduces the construction time of a structure that is constructed from prefabricated building blocks. With the invention the manufacturing dimensions of a connecting element that is to be installed between two structural elements in two interconnected structural blocks are determined before the structural blocks are connected together, whereby the connecting element can be manufactured in advance so that it will be ready to be installed right after the structural blocks have been connected together.

Another advantage of the invention is that it enables to safely and quickly determine the manufacturing dimensions for a connecting element that is to be installed between two structural elements in two interconnected structural blocks.

Still another advantage of the invention is that it enables to accurately determine the manufacturing dimensions for a connecting element that is to be installed between two structural elements in two interconnected structural blocks.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

The exemplary embodiments presented in this text and their advantages relate by applicable parts to the method as well as the system according to the invention, even though this is not always separately mentioned.

### BRIEF DESCRIPTION OF THE DRAWINGS

- Fig. 1: illustrates a flow diagram of a method according to an embodiment of the invention for determining the manufacturing dimensions for a connecting element,
- fig. 2: illustrates the use of a system according to an embodiment of the invention for determining the manufacturing dimensions for a connecting pipe, and
- fig. 3: illustrates an example of a connecting pipe that is installed inside two interconnected ship blocks.

### DETAILED DESCRIPTION OF THE DRAWINGS

The same reference signs are used of the same or like components in different embodiments.

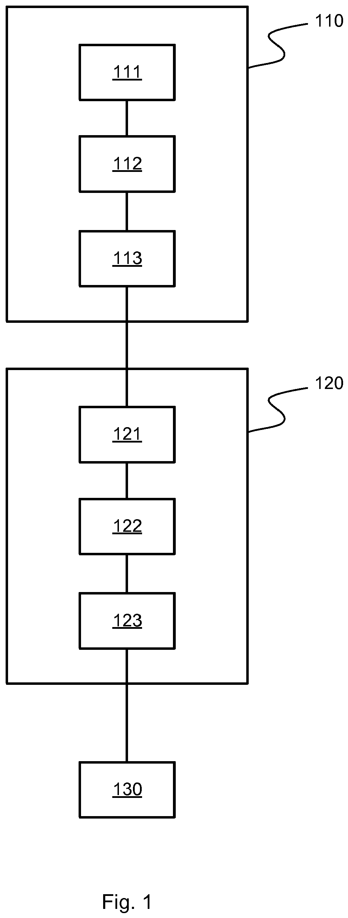

Fig. 1 illustrates a flow diagram of a method according to an embodiment of the invention for determining the manufacturing dimensions for a connecting element that is to be connected between a first structural element in a first structural block and a second structural element in a second structural block.

At step 110, the first and the second structural block are scanned with at least one laser scanner to obtain point clouds of the structural block ends that are to be connected together. The structural elements between which the connecting element is to be installed are visible from the structural block ends. The step 110 contains sub-steps 111, 112 and 113, which are carried out before the structural blocks are connected together.

At sub-step 111, the structural block ends are scanned with the at least one laser scanner from different positions and/or directions. The number of scanning positions depends on the size of the structural block end that is scanned as well as the properties of the laser scanner(s) that is(are) used. The scanning direction can vary based on whether a centre area or an edge area of the structural block end is scanned.

At sub-step 112, scanning data is collected from the at least one laser scanner. The scanning data is processed to generate the point clouds of the structural block ends at sub-step 113. Each point cloud represents the structural block end as a set of data points in a three-dimensional coordinate system. The point clouds comprise data of the structural elements, for example, data of the ends of the structural elements, to which ends the connecting element is to be connected.

At step 120, the point clouds are compared to 3D digital models of the first and the second structural block to obtain the manufacturing dimensions for the connecting element. The 3D digital model of the structural block is a CAD model that is used in building the structural block. The manufacturing dimensions include the necessary data that is needed to manufacture a correct sized connecting element between the structural elements. The step 120 contains sub-steps 121, 122 and 123.

At sub-step 121, the point clouds are aligned on the corresponding 3D digital model using as a point of reference a structure other than the structural element. The structure that is used as a point of reference in the alignment is a structure close to the structural element.

At sub-step 122, the positions of the structural elements in the point clouds with respect to the structural elements in the 3D digital models are calculated, and at sub-step 123, the manufacturing dimensions for the connecting element are calculated using said positions and the data in the 3D digital models. By calculating the positions of the structural elements in the point clouds with respect to the structural elements in the 3D digital models the deviations of the structural elements from their designs are obtained. By utilising this information and the data in the 3D digital models, the manufacturing dimensions for the connecting element can be calculated.

At step 130, an isometric drawing of the connecting element is produced. The isometric drawing is a form of a three-dimensional projection in which all of the principal planes are drawn parallel to corresponding established axes and at true dimensions.

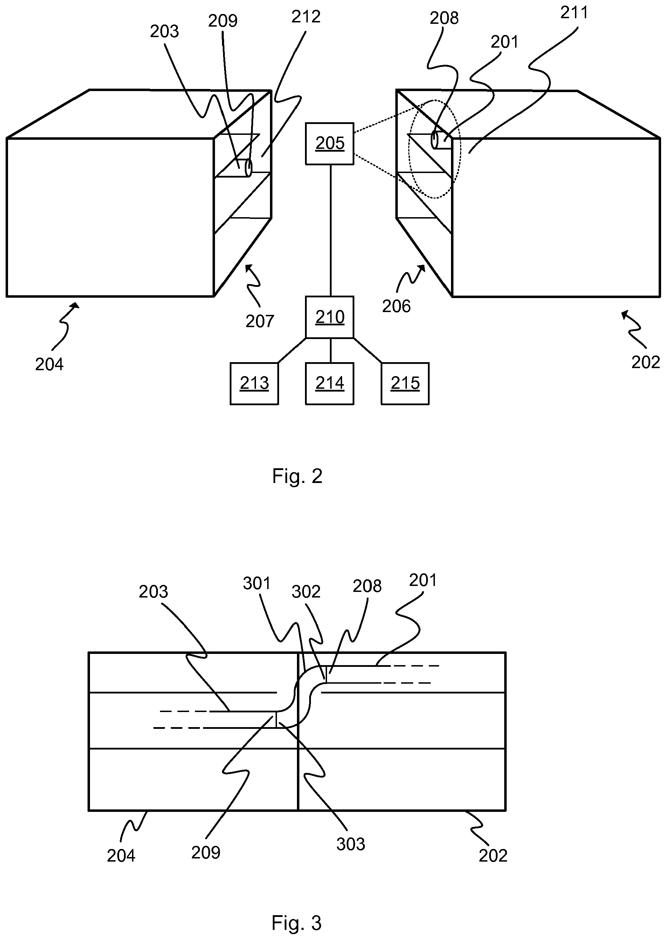

Fig. 2 illustrates the use of a system according to an embodiment of the invention for determining the manufacturing dimensions for a connecting pipe that is to be connected between a first pipe 201 in a first ship block 202 and a second pipe 203 in a second ship block 204.

The system comprises a laser scanner 205 for scanning the ends 206 and 207 of the ship blocks 202 and 204 that are to be connected together. The ship blocks 202 and 204 are scanned one block at a time in several phases. In each phase, the laser scanner 205 is placed in a different position with respect to the ship block 202 or 204 so that all parts of the ship block end 206 or 207 can be scanned. Ends 208 and 209 of the pipes 201 and 203 between which the connecting pipe is to be installed are visible from the ship block ends 206 and 207.

The scanning data is transferred to a computer 210 that comprises memory and at least one processor and computer program code in the memory. The computer program code is configured to, when executed on the at least one processor, cause the system to generate, using the received scanning data, point clouds of the ship block ends 206 and 207, and to compare the point clouds to 3D digital models of the ship blocks 202 and 204 to obtain the manufacturing dimensions for the connecting pipe. In comparing the point clouds to 3D digital models of the ship blocks 202 and 204, each point cloud is aligned on the corresponding 3D digital model using as a point of reference a wall 211 or 212 close to the end 208 or 209 of the pipe 201 or 203, the positions of the pipe ends 208 and 209 in the point clouds with respect to the pipe ends 208 and 209 in the 3D digital models are calculated, and the manufacturing dimensions for the connecting pipe are calculated using said positions and the data in the 3D digital models. The computer program code is also configured to, when executed on the at least one processor, cause the system to produce an isometric drawing of the connecting pipe. The isometric drawing enables to visualize and understand what the connecting pipe will look like and thus makes the manufacturing of the connecting pipe easier.

The computer 210 is connected to a display 213 and to two input devices: a keyboard 214 and a mouse 215. Using the display 213 and the input devices 214 and 215, a user can selectively manage and view the data that is managed and processed in the computer 210.

Fig. 3 illustrates a cross section of two interconnected ship blocks 202 and 204, inside which an exemplary connecting pipe 301 is installed. One end 302 of the connecting pipe 301 is connected to the end 208 of the first pipe 201 in the first ship block 202 and the other end 303 of the connecting pipe 301 is connected to the end 209 of the second pipe 203 in the second ship block 204. The manufacturing dimensions for the connecting pipe 301 are determined with a system according to the invention before the ship blocks 202 and 204 are connected together.

Only advantageous exemplary embodiments of the invention are described in the figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A method for determining the manufacturing dimensions for a connecting element (301) that is to be connected between a first structural element (201) in a first structural block (202) and a second structural element (203) in a second structural block (204) that is connected to the first structural block (202), **characterised in that** the method comprises:
- scanning the first and the second structural block (202, 204) with at least one laser scanner (205) to obtain point clouds of the structural block ends (206, 207) that are to be connected together, and
- comparing the point clouds to 3D digital models of the first and the second structural block (202, 204) to obtain the manufacturing dimensions for the connecting element (301).

2. The method according to claim 1, **characterised in that** the step of scanning the first and the second structural block (202, 204) with at least one laser scanner (205) comprises for each structural block (202, 204):
- scanning the structural block end (206, 207) with the at least one laser scanner (205) from different positions and/or directions,
- collecting scanning data from the at least one laser scanner (205), and
- processing the scanning data to generate the point cloud of the structural block end (206, 207).

3. The method according to claim 2, **characterised in that** the distance between the adjacent scanning positions is less than 10 meters.

4. The method according to any of the preceding claims, **characterised in that** the step of comparing the point clouds to 3D digital models of the first and the second structural block (202, 204) comprises:
- calculating the positions of the structural elements (201, 203) in the point clouds with respect to the structural elements in the 3D digital models, and
- calculating the manufacturing dimensions for the connecting element (301) using said positions and the data in the 3D digital models.

5. The method according to any of the preceding claims, **characterised in that** the method comprises aligning each point cloud on the corresponding 3D digital model using as a point of reference a structure (211, 212) other than the structural element.

6. The method according to any of the preceding claims, **characterised in that** the method comprises producing an isometric drawing of the connecting element (301).

7. The method according to any of the preceding claims, **characterised in that** the connecting element (301) and the structural elements (201, 203) are one of the following: a pipe, a duct, a cable tray or a frame for an interior design.

8. The method according to any of the preceding claims, **characterised in that** the structural blocks (202, 204) are one of the following: a ship block or an offshore structure block.

9. A system configured for determining the manufacturing dimensions for a connecting element (301) that is to be connected between a first structural element (201) in a first structural block (202) and a second structural element (203) in a second structural block (204) that is connected to the first structural block (202), **characterised in that** the system comprises:
- at least one laser scanner (205) for scanning the first and the second structural block (202, 204) to obtain scanning data of the structural block ends (206, 207) that are to be connected together, and
- a data processing means (210) configured for generating, using the scanning data, point clouds of the structural block ends (206, 207) and comparing the point clouds to 3D digital models of the first and the second structural block (202, 204) to obtain the manufacturing dimensions for the connecting element (301).

10. The system according to claim 9, **characterised in that** the laser scanner (205) is a phase-shift laser scanner.

11. The system according to claim 9 or 10, **characterised in that** the laser scanner (205) is a grayscale laser scanner.

## Patentansprüche

1. Verfahren zum Bestimmen der Herstellungsabmessungen für ein Verbindungselement (301), welches zwischen einem ersten Strukturelement (201) in einem ersten Strukturblock (202) und einem zweiten Strukturelement (203) in einem zweiten Strukturblock (204), welcher mit dem ersten Strukturblock (202) verbunden ist, anzuschließen ist, **dadurch gekennzeichnet, dass** das Verfahren umfasst:
- Abtasten des ersten und zweiten Strukturblocks (202, 204) mit mindestens einem Laserabtaster (205) um Punktwolken von den Strukturblockenden (206, 207), welche miteinander zu verbinden sind, zu erhalten, und
- Vergleichen der Punktwolken mit 3D-Digitalmodellen des ersten und zweiten Strukturblocks (202, 204), um die Herstellungsabmessungen für das Verbindungselement (301) zu erhalten.

2. Verfahren nach Anspruch 1, **dadurch gekennzeichnet, dass** der Schritt des Abtastens des ersten und zweiten Strukturblocks (202, 204) mit mindestens einem Laserabtaster (205) für jeden Strukturblock (202, 204) umfasst:
- Abtasten des Strukturblockendes (206, 207) mit dem mindestens einen Laserabtaster (205) aus unterschiedlichen Positionen und/oder Richtungen,
- Sammeln von Abtastdaten von dem mindestens einen Laserabtaster (205), und
- Verarbeiten der Abtastdaten, um die Punktwolke des Strukturblockendes (206, 207) zu erzeugen.

3. Verfahren nach Anspruch 2, **dadurch gekennzeichnet, dass** der Abstand zwischen den benachbarten Abtastpositionen weniger als 10 Meter beträgt.

4. Verfahren nach einem der vorhergehenden Ansprüche, **dadurch gekennzeichnet, dass** der Schritt von Vergleichen der Punktwolken mit 3D-Digitalmodellen des ersten und des zweiten Strukturblocks (202, 204) umfasst:
- Berechnen der Positionen der Strukturelemente (201, 203) in den Punktwolken bezogen auf die Strukturelemente in den 3D-Digitalmodellen, und
- Berechnen der Herstellungsabmessungen für das Verbindungselement (301) unter Verwendung der Positionen und der Daten in den 3D-Digitalmodellen.

5. Verfahren nach einem der vorhergehenden Ansprüche, **dadurch gekennzeichnet, dass** das Verfahren ein Angleichen einer jeden Punktwolke an das entsprechende 3D-Digitalmodell unter Verwendung einer anderen Struktur (211, 212) als das Strukturelement als einen Referenzpunkt umfasst.

6. Verfahren nach einem der vorhergehenden Ansprüche, **dadurch gekennzeichnet, dass** das Verfahren ein Erzeugen einer isometrischen Zeichnung des Verbindungselements (301) umfasst.

7. Verfahren nach einem der vorhergehenden Ansprüche, **dadurch gekennzeichnet, dass** das Verbindungselement (301) und die Strukturelemente (201, 203) eines der folgenden sind: ein Rohr, eine Leitung, eine Kabeltrasse oder ein Rahmen für eine Innenraumgestaltung.

8. Verfahren nach einem der vorhergehenden Ansprüche, **dadurch gekennzeichnet, dass** die Strukturblöcke (202, 204) einer der folgenden sind: ein Schiffsblock oder ein Strukturblock auf offener See.

9. System, welches zum Bestimmen der Herstellungsabmessungen für ein Verbindungselement (301) ausgestaltet ist, welches zwischen einem ersten Strukturelement (201) in einem ersten Strukturblock (202) und einem zweiten Strukturelement (203) in einem zweiten Strukturblock (204), welcher mit dem ersten Strukturblock (202) verbunden ist, anzuschließen ist, **dadurch gekennzeichnet, dass** das System umfasst:
- mindestens einen Laserabtaster (205) zum Abtasten des ersten und des zweiten Strukturblocks (202, 204), um Abtastdaten von den Strukturblockenden (206, 207), welche miteinander zu verbinden sind, zu erhalten, und
- ein Datenverarbeitungsmittel (210), welches zum Erzeugen von Punktwolken der Strukturblockenden (206, 207) unter Verwendung der Abtastdaten und Vergleichen der Punktwolken mit 3D-Digitalmodellen von dem ersten und dem zweiten Strukturblock (202, 204), um die Herstellungsabmessungen für das Verbindungselement (301) zu erhalten, ausgestaltet ist.

10. System nach Anspruch 9, **dadurch gekennzeichnet, dass** der Laserabtaster (205) ein Phasenschieberlaserabtaster ist.

11. System nach Anspruch 9 oder 10, **dadurch gekennzeichnet, dass** der Laserabtaster (205) ein Graustufenlaserabtaster ist.

## Revendications

1. Procédé de détermination des dimensions de fabrication pour un élément de raccordement (301) qui doit être raccordé entre un premier élément structurel (201) dans un premier bloc structurel (202) et un second élément structurel (203) dans un second bloc structurel (204) qui est raccordé au premier bloc structurel (202), **caractérisé en ce que** le procédé comprend :
- le balayage du premier et du second bloc structurel (202, 204) avec au moins un dispositif de balayage laser (205) pour obtenir des nuages de points des extrémités de bloc structurel (206, 207) qui doivent être raccordées ensemble, et
- la comparaison des nuages de points à des modèles numériques 3D du premier et du second bloc structurel (202, 204) pour obtenir les dimensions de fabrication pour l'élément de raccordement (301).

2. Procédé selon la revendication 1, **caractérisé en ce que** l'étape de balayage du premier et du second bloc structurel (202, 204) avec au moins un dispositif de balayage laser (205) comprend pour chaque bloc structurel (202, 204) :
- le balayage de l'extrémité de bloc structurel (206, 207) avec l'au moins un dispositif de balayage laser (205) à partir de positions et/ou de directions différentes,
- la collecte de données de balayage depuis l'au moins un dispositif de balayage laser (205), et
- le traitement des données de balayage pour générer le nuage de points de l'extrémité de bloc structurel (206, 207).

3. Procédé selon la revendication 2, **caractérisé en ce que** la distance entre les positions de balayage adjacentes est inférieure à 10 mètres.

4. Procédé selon l'une quelconque des revendications précédentes, **caractérisé en ce que** l'étape de comparaison des nuages de points à des modèles numériques 3D du premier et du second bloc structurel (202, 204) comprend :
- le calcul des positions des éléments structurels (201, 203) dans les nuages de points par rapport aux éléments structurels dans les modèles numériques 3D, et
- le calcul des dimensions de fabrication pour l'élément de raccordement (301) à l'aide desdites positions et des données dans les modèles numériques 3D.

5. Procédé selon l'une quelconque des revendications précédentes, **caractérisé en ce que** le procédé comprend l'alignement de chaque nuage de points sur le modèle numérique 3D correspondant en utilisant comme point de référence une structure (211, 212) autre que l'élément structurel.

6. Procédé selon l'une quelconque des revendications précédentes, **caractérisé en ce que** le procédé comprend la production d'un dessin isométrique de l'élément de raccordement (301).

7. Procédé selon l'une quelconque des revendications précédentes, **caractérisé en ce que** l'élément de raccordement (301) et les éléments structurels (201, 203) sont l'un des éléments suivants : une canalisation, une conduite, un chemin de câble ou un châssis pour une conception intérieure.

8. Procédé selon l'une quelconque des revendications précédentes, **caractérisé en ce que** les blocs structurels (202, 204) sont l'un des éléments suivants : un bloc de navire ou un bloc de structure en mer.

9. Système configuré pour déterminer les dimensions de fabrication pour un élément de raccordement (301) qui doit être raccordé entre un premier élément structurel (201) dans un premier bloc structurel (202) et un second élément structurel (203) dans un second bloc structurel (204) qui est raccordé au premier bloc structurel (202), **caractérisé en ce que** le système comprend :
- au moins un dispositif de balayage laser (205) pour balayer le premier et le second bloc structurel (202, 204) pour obtenir des données de balayage des extrémités de bloc structurel (206, 207) qui doivent être raccordées ensemble, et
- un moyen de traitement de données (210) configuré pour générer, à l'aide des données de balayage, des nuages de points des extrémités de bloc structurel (206, 207) et comparer les nuages de points à des modèles numériques 3D du premier et du second bloc structurel (202, 204) pour obtenir les dimensions de fabrication pour l'élément de raccordement (301).

10. Système selon la revendication 9, **caractérisé en ce que** le dispositif de balayage laser (205) est un dispositif de balayage laser à déphasage.

11. Système selon la revendication 9 ou 10, **caractérisé en ce que** le dispositif de balayage laser (205) est un dispositif de balayage laser à échelle de gris.
